# EUROPÄISCHE PATENTSCHRIFT

(11) **EP 0 842 644 B1**
(45) Veröffentlichungstag und Bekanntmachung des Hinweises auf die Patenterteilung: **12.12.2001**
(21) Anmeldenummer: 97118930.3
(22) Anmeldetag: 30.10.1997
(51) Int. Cl.: A61C 13/265

(54) **Zahntechnisches Geschiebe**
Dental attachment
Attachement dentaire

(30) Priorität: 19.11.1996 DE 19649969
(43) Veröffentlichungstag der Anmeldung: 20.05.1998
(73) Patentinhaber: ZL Microdent-Attachment GmbH & Co. KG, 58339 Breckerfeld (DE)
(72) Erfinder: Clostermann, Volkhard-Hagen, 58097 Hagen (DE)
(74) Vertreter: Dörner, Lothar, Dipl.-Ing.

(56) Entgegenhaltungen:
- EP-A- 0 085 781
- EP-A- 0 239 821
- US-A- 3 117 377

## Beschreibung

Die Erfindung betrifft ein zahntechnisches Geschiebe zur lösbaren Befestigung einer Zahnprothese an einem Restzahn mit einer Matrize und einer von der Matrize aufgenommenen Patrize, die an einer Seite eines Quersteges angeordnet ist, der mit seiner anderen Seite an einen Steg angeformt ist, in den eine einen Konus und ein Gewinde aufweisende Bohrung eingebracht ist, deren Längsmittellinie auf der Mittellinie eines die Patrize und den Quersteg teilenden und in dem Steg endenden Schlitzes liegt, und der in eine Aufnahmekappe eingeschoben ist, die eine mit der Bohrung des Steges fluchtende Bohrung aufweist.

Zahntechnische Geschiebe finden bei der Befestigung von Prothesen und abnehmbaren Brücken Anwendung. Dabei ist an einem Restzahn oder an einer auf einen beschliffenen Zahnstumpf aufgesetzten Krone eine Matrize befestigt, die in zusammengesetztem Zustand eine Patrize umschließt, die Bestandteil der Prothese oder Brücke ist. Die Patrize weist entlang ihrer Längsmittellinie einen durchgehenden Schlitz auf, wodurch zwei Lamellen ausgebildet sind. Die Lamellen werden beim Einpassen der Patrize in die Matrize mit Hilfe eines Werkzeugs gespreizt, wodurch ein exakter und fester Sitz der Patrize in der Matrize erreicht ist. Dieser Vorgang wird mit "Aktivierung" bezeichnet.

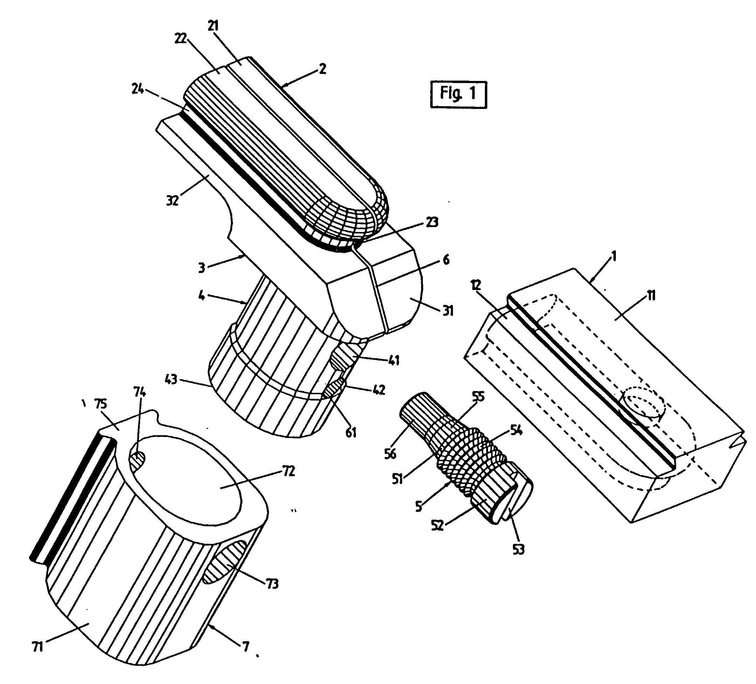

Es ist ein Geschiebe bekannt (vgl. EP 0 239 821 B1), bei dem sich der Schlitz in einen an die Patrize angeformten Quersteg fortsetzt. An dem sich in dem Quersteg befindenden Ende des Schlitzes ist eine Aktivierschraube vorgesehen. Die Schraube weist an ihrem einen Ende einen Konus auf, der beim Einschrauben zum Aufspreizen der Lamellen führt. In der Praxis ist auf der der Patrize abgewandten Seite des Quersteges ein weiterer Steg angeordnet, der eine zu der in dem Quersteg befindlichen Bohrung parallele Gewindebohrung aufweist (vgl. "dental-labor", XLIV, Heft 8/96 S. 1279 Abb. 1). In zusammengebautem Zustand des Geschiebes ist der Steg in eine Aufnahmekappe eingeschoben, die eine mit der Gewindebohrung fluchtende Öffnung aufweist, so daß eine Befestigungsschraube durch die Öffnung der Aufnahmekappe hindurch in die Gewindebohrung des Steges eingeschraubt werden kann. Dieses Geschiebe weist - ebenso wie weitere bekannte Geschiebe (vgl. EP 0 085 781 B1; DE 9 100 784 U) - den Nachteil auf, daß zum Befestigen und Aktivieren des Geschiebes zwei Schrauben benötigt werden. Die Konstruktion ist daher aufwendig. Darüber hinaus befindet sich die Aktivierschraube in zusammengebautem Zustand des Geschiebes im Bereich der Papille des Restzahns oder beschliffenen Zahnstumpfes, was zu Zahnfleischreizungen und -entzündungen führen kann.

Hier will die Erfindung Abhilfe schaffen. Der Erfindung liegt die Aufgabe zugrunde, ein zahntechnisches Geschiebe zu schaffen, bei dem zur Befestigung und Aktivierung nur eine Schraube notwendig ist. Gemäß der Erfindung wird diese Aufgabe dadurch gelöst, daß in der Bohrung des Stegs und in der Bohrung der Aufnahme happe eine die Aufnahmekappe durch ihre Bohrung durchsetzende Befestigungs- und Arretiervorrichtung in Form eines einen Konus aufweisenden Schraubbolzens angeordnet ist.

Mit der Erfindung ist ein zahntechnisches Geschiebe geschaffen, das zum Aktivieren und Befestigen nur eine Schraube benötigt. Die Schraube ist in einem Bereich angeordnet, der etwa zwischen den bisher verwendeten Aktivier- und Besfestigungsschrauben liegt. Durch die Verwendung nur einer Schraube ist die Möglichkeit gegeben, sie von dem Bereich der Papille des beschliffenen Zahnes entfernt anzuordnen, so daß die Gefahr von Reizungen und Entzündungen des Zahnfleisches reduziert ist. Darüber hinaus befindet sich die einzige Schraube in einem gut zugänglichen Bereich des Geschiebes.

Weiterbildungen und Ausgestaltungen der Erfindung sind in den Unteransprüchen beschrieben. Ein Ausführungsbeispiel der Erfindung ist in der Zeichnung dargestellt und wird nachfolgend im einzelnen beschrieben. Es zeigen:
- Figur 1: eine Explosionszeichnung eines zahntechnischen Geschiebes in vergrößerter Darstellung;
- Figur 2: einen Querschnitt durch die in Figur 1 dargestellte Patrize mit Steg und Quersteg;
- Figur 3: einen zu Figur 2 gehörenden Schnitt entlang der Längsmittellinie des Geschiebes;
- Figur 4: einen Schnitt entlang der Linie A-B in Figur 2;
- Figur 5a: einen Querschnitt durch die in Figur 1 dargestellte Matrize;
- Figur 5b: einen zu Figur 5a gehörenden Schnitt entlang der Längsmittellinie der Matrize;
- Figur 6: die Ansicht eines Bolzens.

Das als Ausführungsbeispiel gewählte Geschiebe besteht aus einer Matrize 1, in die in montiertem Zustand des Geschiebes eine Patrize 2 eingesetzt ist. An die Patrize 2 ist ein Quersteg 3 angeformt, ab den auf seiner der Patrize 2 abgewandten Seite ein rechtwinklig zur Längsmittellinie der Patrize 2 angeordneter Steg 4 angeformt ist. Der Steg 4 ist mit einer Befestigungs- und Arretiervorrichtung in Form eines Bolzens 5 versehen. Entlang der Längsmittellinie der Patrize 2 sind die Patrize 2, der Quersteg 3 und ein Teil des Steges 4 durch einen Schlitz 6 geteilt. Der Steg 4 ist in zusammengebautem Zustand des Geschiebes in eine Aufnahmekappe 7 eingesetzt.

Die Matrize 1 weist eine im wesentlichen quaderförmige Gestalt auf. Auf der der Patrize 2 abgewandten Seite weist die Matrize 1 eine schwalbenschwanzförmige Ausbildung 11 auf. Die Ausbildung 11 dient der Befestigung der Matrize 1 an einem Restzahn oder einer nicht dargestellten Krone, die auf einen beschliffenen Zahnstumpf aufgesetzt ist. Auf ihrer der Ausbildung 11 abgewandten Seite weist die Matrize eine Aussparung 12 zur Aufnahme der Patrize 2 auf.

Die Patrize 2 ist durch den Schlitz 6 entlang ihrer Längsmittellinie in zwei Lamellen 21, 22 geteilt. Die Lamellen 21, 22 sind mittels zweier Zwischenstücke 23, 24 mit dem Quersteg 3 verbunden. Die Formgebung der Patrize 2 ist durch die Form der Matrize 1 bestimmt. Die Lamellen 21, 22 der Patrize 2 stellen dabei das Positiv zu dem durch die Aussparung 12 gebildeten Negativ in der Matrize 1 dar.

Der Quersteg 3 weist an seinem einen Ende eine Schräge 31 auf. Mit der Schrägen 31 ragt der Quersteg 3 über die Patrize 2 hinaus. Auf seinem der Schrägen 31 abgewandten Ende weist der Quersteg 3 eine Verjüngung 32 auf. Das der Schrägen 31 abgewandte Ende des Querstegs 3 schließt bündig mit der Patrize 2 ab. In dem nicht verjüngten Bereich des Querstegs 3 ist auf der der Patrize 2 abgewandten Seite der Steg 4 angeordnet.

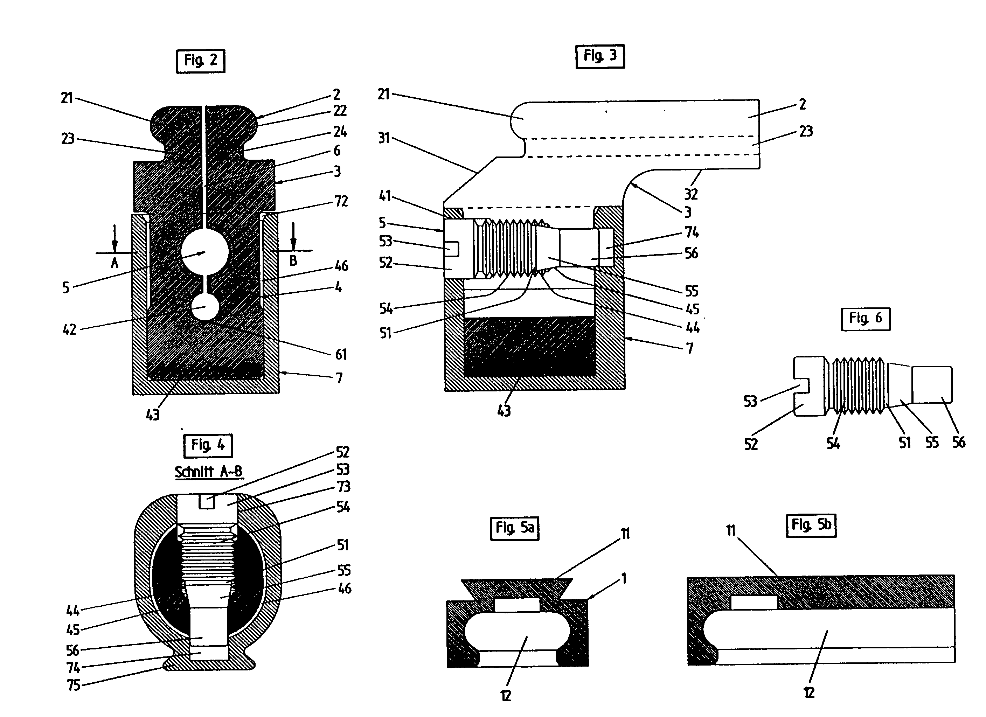

Der Steg 4 weist die Form eines Zylinders mit elliptischer Grundfläche auf. Der Steg 4 ist rechtwinklig zur Längsmittellinie des Quersteges 3 an diesem angeordnet. In den Steg 4 ist eine Durchgangsbohrung 41 eingebracht, die parallel zu den Längsmittellinien der Patrize 2 und des Quersteges 3 verläuft. In der Bohrung 41 befindet sich ein Gewinde 44. Die Längsmittellinie der Bohrung 41 verläuft in der Ebene des Schlitzes 6. In der Bohrung 41 ist etwa in der Mitte ein Konus 45 ausgebildet. Weiterhin weist der Steg 4 eine zu der Bohrung 41 parallel verlaufende Bohrung 42 auf. Die Bohrung 42 befindet sich auf der dem Quersteg 3 abgewandten Seite der Bohrung 41. Die Längsmittellinie der Bohrung 42 verläuft ebenfalls in der Ebene des Schlitzes 6. Das Ende 61 des Schlitzes 6 befindet sich auf der dem Quersteg 3 abgewandten Seite der Bohrung 42. Im Ausführungsbeispiel endet der Schlitz 6 in der Bohrung 42 des Steges 4 - Figur 2 -. An seinem freien Ende 43 weist der Steg 4 einen vergrößerten Durchmesser auf. Dadurch ist rings um den Steg auf seiner der Matrize zugewandten Seite in dem in die Aufnahmekappe 7 eingeführten Zustand ein Freiraum 46 geschaffen.

Die Befestigungs- und Arretiervorrichtung hat die Form eines im wesentlichen zylindrischen Bolzens 5. Der Bolzen 5 weist an seinem einen Ende einen Kopf 52 auf, in den ein Schlitz 53 eingebracht ist. Der Schlitz 53 dient zum Ansetzen eines Schraubendrehers. An den Kopf 52 anschließend ist ein Gewinde 54 angeordnet. Das Gewinde 54 erstreckt sich etwa über die halbe Länge des Bolzens 5. Im Anschluß an das Gewinde 54 weist der Bolzen 5 einen zylindrischen Abschnitt 51 auf. Der zylindrische Abschnitt 51 geht an seinem dem Kopf 52 abgewandten Ende in einen Konus 55 über, der sich in Richtung des dem Kopf 52 abgewandten Endes verjüngt. Der Konus 55 kann sich in Abwandlung des Ausführungsbeispiels auch direkt an das Gewinde 54 anschließen. Im Anschluß an den Konus 55 weist der Bolzen 5 einen Zylinder 56 auf, der sich bis zu dem dem Kopf 52 abgewandten Ende des Bolzens 5 erstreckt. Der Konus 55 korrespondiert in zusammengebautem Zustand des Geschiebes mit dem Konus 45 des Steges 4.

Die Aufnahmekappe 7 besteht aus einem Mantel 71, der zum Umgreifen des Stegs 4 mit einer seinem Querschnitt angepaßten Ausnehmung 72 versehen ist. Die Aufnahmekappe 7 weist zur Befestigung an dem Steg 4 eine Bohrung 73 auf, die in zusammengebautem Zustand des Geschiebes mit der Bohrung 41 des Stegs 4 fluchtet. Zu der Bohrung 73 koaxial ist in der Aufnahmekappe 7 eine Führung 74 angeordnet. Die Führung 74 fluchtet in zusammengebautem Zustand des Geschiebes ebenfalls mit der Bohrung 41. Auf der Seite der Führung 74 ist an der Aufnahmekappe 7 eine Vorrichtung 75 angeordnet, die zum Befestigen einer Prothese dient und die in Form eines Schwalbenschwanzes ausgeführt ist.

Beim Einpassen des Geschiebes wird zunächst die Aufnahmekappe 7 mit ihrer Ausnehmung 72 über den Steg 4 geschoben. Zum Befestigen der Aufnahmekappe 7 an dem Steg wird der Schraubbolzen 51 durch die Bohrung 73 der Aufnahmekappe 7 hindurch in die Bohrung 41 des Stegs 4 eingeschraubt. Der Befestigungsvorgang ist abgeschlossen, wenn der Konus 55 des Schraubbolzens an dem in der Bohrung 41 angeordneten Konus 45 anliegt. In diesem Zustand ragt der Zylinder 56 des Schraubbolzens 5 bereits in die Führung 74 der Aufnahmekappe 7 - Figur 3 -. Die exakte Befestigung der Aufnahmekappe 7 an dem Steg 4 erfolgt durch die paßgenaue Abstimmung der Durchmesser des Zylinders 56 und der Führung 74 sowie des Kopfes 52 und der Bohrung 73. In diesem Zustand übernimmt der Bolzen 5 die Funktion einer Befestigungsschraube.

Zum Aktivieren des Geschiebes wird der Bolzen weiter in die Bohrung 41 des Stegs 4 eingeschraubt. Auf Grund seines bei der weiteren Einschraubbewegung zurückgelegten Weges drückt der Konus 55 gegen den in der Bohrung 41 befindlichen Konus. Durch diesen von dem Konus 55 auf den Konus der Bohrung 41 ausgeübten Druck werden der Quersteg 3 sowie die Patrize 2 entlang des Schlitzes 6 aufgespreizt. Durch den Freiraum 46 zwischen Steg 4 und Aufnahmekappe 7 ist das Aufspreizen des Steges 4 problemlos bis zum Anliegen an der Aufnahmekappe 7 ermöglicht. Da die Bohrung 41 in dem Steg 4 näher an dem Ende 61 des Schlitzes 6 angeordnet ist als die Lamellen 21 und 22 der Patrize 2, bewirkt eine kleine Spreizung im Bereich des in der Bohrung 41 angeordneten Konus mittels des Konus 55 zwischen den Lamellen 21 und 22 eine größere Spreizung. Dadurch führt eine geringe Vergrößerung der Einschraubtiefe des Bolzens 5 zu einer ausreichenden Spreizung im Bereich der Lamellen 21 und 22. Durch den sich vergrößernden Schlitz an dem dem Quersteg 3 abgewandten Ende der Patrize 2 paßt sich die Patrize 2 mit den Lamellen 21, 22 genau der Aussparung 12 in der Matrize 1 an. Damit ist ein exakter und fester Sitz der Patrize 2 in der Matrize 1 erreicht. Gleichzeitig ist eine gewisse Nachgiebigkeit auf Grund des Schlitzes 6 erzielt, was bei hoher Beanspruchung des Geschiebes die Gefahr von Beschädigungen reduziert.

In Abänderung des Ausführungsbeispiels kann das Gewinde anstelle in der Bohrung 41 des Stegs 4 auch in der Bohrung 73 und/oder der Führung 74 der Aufnahmekappe 7 angeordnet sein.

Alle beschriebenen geometrischen Ausbildungen können auch anders ausgeführt werden, zum Beispiel hexagonal, konisch-zylindrisch, quadratisch, rechteckig oder dreieckig.

Verwendet werden für die beschriebenen Teile Metalle aus einer mundbeständigen Legierung. Vorzugsweise finden Edelmetalle der Gold- und Platin-Gruppe Anwendung. Alle anderen mundbeständigen Legierungen sind jedoch ebenfalls einsetzbar. Auch Kunststoffe, die mundbeständig und körperverträglich sind, können verwendet werden. Auch können die Teile aus keramischen Stoffen sowie Verbundwerkstoffen hergestellt werden.

## Patentansprüche

1. Zahntechnisches Geschiebe zur lösbaren Befestigung einer Zahnprothese an einem Restzahn, mit einer Matrize (1) und einer von der Matrize aufgenommenen Patrize (2), die an einer Seite eines Quersteges (3) angeordnet ist, der mit seiner anderen Seite an einen Steg (4) angeformt ist, in den eine einen Konus (45) und ein Gewinde (44) aufweisende Bohrung (41) eingebracht ist, deren Längsmittellinie auf der Mittellinie eines die Patrize und den Quersteg teilenden und in dem Steg endenden Schlitzes (6) liegt, und der in eine Aufnahmekappe (7) eingeschoben ist, die eine mit der Bohrung des Steges fluchtende Bohrung (73) aufweist, **dadurch gekennzeichnet, daß** in der Bohrung (41) des Stegs (4) und in der Bohrung (73) der Aufnahmekappe eine die Aufnahmekappe (7) durch ihre Bohrung (73) durchsetzende Befestigungs- und Arretiervorrichtung in Form eines einen Konus (55) aufweisenden Schraubbolzens (5) angeordnet ist.

2. Zahntechnisches Geschiebe nach Anspruch 1, **dadurch gekennzeichnet, daß** die Bohrung (41) im Abstand zu einem Ende (61) des Schlitzes (6) in dem Steg (4) angeordnet ist.

3. Zahntechnisches Geschiebe nach Anspruch 1 oder 2, **dadurch gekennzeichnet, daß** der Konus (55) im mittleren Bereich des Bolzens (5) angeordnet ist.

4. Zahntechnisches Geschiebe nach einem der Ansprüche 1 bis 3, **dadurch gekennzeichnet, daß** die Bohrung (73) der Aufnahmekappe (7) ein Gewinde aufweist.

5. Zahntechnisches Geschiebe nach einem der Ansprüche 1 bis 4, **dadurch gekennzeichnet, daß** die Aufnahmekappe (7) aus einer mundverträglichen Metall-Legierung hergestellt ist.

6. Zahntechnisches Geschiebe nach einem der Ansprüche 1 bis 4, **dadurch gekennzeichnet, daß** die Aufnahmekappe (7) mittels eines umgießbaren Platzhalters aus einem mundverträglichen Keramikwerkstoff gebildet ist.

7. Zahntechnisches Geschiebe nach einem der Ansprüche 1 bis 6, **dadurch gekennzeichnet, daß** der Konus (55) an dem Bolzen (5) im Anschluß an ein Gewinde (54) angeordnet ist.

8. Zahntechnisches Geschiebe nach Anspruch 7, **dadurch gekennzeichnet, daß** zwischen dem Konus (55) und dem Gewinde (54) ein zylindrischer Abschnitt (51) vorgesehen ist.

9. Zahntechnisches Geschiebe nach einem der Ansprüche 1 bis 8, **dadurch gekennzeichnet, daß** die Aufnahmekappe (7) eine Führung (74) aufweist, die zu der Bohrung (73) koaxial angeordnet ist.

10. Zahntechnisches Geschiebe nach Anspruch 9, **dadurch gekennzeichnet, daß** der Bolzen (5) an seinem einen Ende einen Zylinder (56) aufweist, der in die Führung (74) der Aufnahmekappe (7) ragt.

11. Zahntechnisches Geschiebe nach einem der Ansprüche 1 bis 10, **dadurch gekennzeichnet, daß** zwischen der Aufnahmekappe (7) und dem Steg (4) im Anschluß an den Quersteg (3) ein ringsum laufender Freiraum (46) ausgebildet ist.

## Claims

1. Dental attachment for detachable fastening of a dental prosthesis to the stump of a tooth, with a female element (1) and a male element (2) which is received by the female element and which is located on one side of a transverse bar (3) and whose other side is shaped as a cam (4) which contains a hole (41) with a taper (45) and a thread (44), and whose longitudinal centre line lies on the centre line of a slot (6) which divides the male element and the transverse bar and ends in the cam, and which cam is inserted into a seating cap (7) which has a hole (73) aligned with the hole of the cam, **characterised in that** in the hole (41) of the cam (4) and in the hole (73) of the seating cap, there is an attachment and locking device in the form of a screw bolt (5) with a taper (55) which passes through the seating cap (7) by its hole (73).

2. Dental attachment according to claim 1 **characterised in that** the hole (41) is located in the cam (4) at a distance to one end (61) of the slot (6).

3. Dental attachment according to claim 1 or 2 **characterised in that** the taper (55) is located in the centre area of the bolt (5).

4. Dental attachment according to one of the claims 1 to 3 **characterised in that** the hole (73) of the seating cap (7) has a thread.

5. Dental attachment according to one of the claims 1 to 4 **characterised in that** the seating cap (7) is manufactured in a metal alloy suitable for wearing in the mouth.

6. Dental attachment according to one of the claims 1 to 4 **characterised in that** the seating cap (7), by means of a re-castable filler, is made of a ceramic material suitable for wearing in the mouth.

7. Dental attachment according to one of the claims 1 to 6 **characterised in that** the taper (55) on the bolt (5) is located at the end of a thread (54)

8. Dental attachment according to claim 7 **characterised in that** a cylindrical section (51) is provided between the taper (55) and the thread (54).

9. Dental attachment according to one of the claims 1 to 8 **characterised in that** the seating cap (7) has a guide element (74) co-axially aligned with the hole (73).

10. Dental attachment according to claim 9 **characterised in that** the bolt (5) has a cylinder (56) at its one end which projects into the guide element (74) of the seating cap (7).

11. Dental attachment according to one of the claims 1 to 10 **characterised in that** a circumferential space (46) is formed between the seating cap (7) and the cam (4) at the end of the transverse bar (3).

## Revendications

1. Attachement dentaire pour la fixation amovible d'une prothèse dentaire à une dent restante, comprenant une matrice (1) et un modèle (2) logé dans la matrice qui est disposé d'un côté d'une moulure transversale (3) qui est façonnée avec son autre côté contre une moulure (4) dans laquelle est pratiqué un alésage (41) présentant un cône (45) et un filet de vis (44), dont la ligne médiane longitudinale est située sur la ligne médiane d'une fente (6) séparant le modèle et la moulure transversale et se terminant dans la moulure, et qui vient s'insérer dans un capuchon de réception (7) qui présente un alésage (73) disposé à fleur avec l'alésage de la moulure, **caractérisé en ce que**, dans l'alésage (41) de la moulure (4) et dans l'alésage du capuchon de réception (7), est disposé un dispositif de fixation et de blocage traversant le capuchon de réception (7) en passant par son alésage (73), sous la forme d'un boulon fileté (5) présentant un cône (55).

2. Attachement dentaire selon la revendication 1, **caractérisé en ce que** l'alésage (41) est disposé dans la moulure (4) à distance de la première extrémité (61) de la fente (6).

3. Attachement dentaire selon la revendication 1 ou 2, **caractérisé en ce que** le cône (55) est disposé dans la zone médiane du boulon (5).

4. Attachement dentaire selon l'une quelconque des revendications 1 à 3, **caractérisé en ce que** l'alésage (73) du capuchon de réception (7) présente un filet de vis.

5. Attachement dentaire selon l'une quelconque des revendications 1 à 4, **caractérisé en ce que** le capuchon de réception (7) est réalisé en un alliage métallique compatible avec la bouche.

6. Attachement dentaire selon l'une quelconque des revendications 1 à 4, **caractérisé en ce que** le capuchon de réception (7) est formé à l'aide d'un écarteur apte à être refondu constitué d'un matériau en céramique compatible avec la bouche.

7. Attachement dentaire selon l'une quelconque des revendications 1 à 6, **caractérisé en ce que** le cône (55) est disposé en position adjacente à un filet de vis (54).

8. Attachement dentaire selon la revendication 7, **caractérisé en ce que**, entre le cône (55) et le filet de vis (54), on prévoit une section cylindrique (51).

9. Attachement dentaire selon l'une quelconque des revendications 1 à 8, **caractérisé en ce que** le capuchon de réception (7) présente un guidage (74) qui est disposé en position coaxiale à l'alésage (73).

10. Attachement dentaire selon la revendication 9, **caractérisé en ce que** le boulon (5) présente, à une de ses extrémités, un cylindre (56) qui fait saillie dans le guidage (74) du capuchon de réception (7).

11. Attachement dentaire selon l'une quelconque des revendications 1 à 10, **caractérisé en ce que**, entre le capuchon de réception (7) et la moulure (4), en position adjacente à la moulure transversale (3), on réalise un espace libre (46) s'étendant à la périphérie.
